# EUROPÄISCHE PATENTSCHRIFT

(11) **EP 0 961 066 B1**
(45) Veröffentlichungstag und Bekanntmachung des Hinweises auf die Patenterteilung: **17.12.2003**
(21) Anmeldenummer: 99110432.4
(22) Anmeldetag: 28.05.1999
(51) Int. Cl.: F16K 37/00

(54) **Frei programmierbare Stellungsanzeigevorrichtung**
Free programmable position indication device
Dispositif programmable d'indication de position

(30) Priorität: 28.05.1998 DE 29809667 U
(43) Veröffentlichungstag der Anmeldung: 01.12.1999
(73) Patentinhaber: GEMÜ Gebrüder Müller Apparatebau GmbH & Co. KG, 74653 Ingelfingen (DE)
(72) Erfinder: Müller, Fritz, 74653 Ingelfingen (DE); Gaida, Gregor Dipl.-Ing., 74676 Niedernhall (DE); Mayer, Jürgen, 74523 Schwäbisch Hall (DE)
(74) Vertreter: Hering, Hartmut, Dipl.-Ing.

(56) Entgegenhaltungen:
- EP-A- 0 844 425
- WO-A-89/05938
- US-A- 4 590 963
- US-A- 5 027 853
- US-A- 5 109 675
- US-A- 5 150 103
- US-A- 5 152 308
- US-A- 5 223 822
- US-A- 5 504 426
- US-A- 5 523 682

## Beschreibung

Die Erfindung befaßt sich mit einer frei programmierbaren Stellungsanzeigevorrichtung, welche insbesondere jedoch nicht ausschließlich für Ventile, wie Membranventile oder dergleichen, bestimmt ist, und ein bewegbares Stellglied aufweist.

Programmierbare Stellungsanzeigevorrichtungen dieser Art sind aus den Dokumenten US 5 223 822, US 5 150 103 und US 5 523 682 bekannt.

Bisher wurden insbesondere bei Ventilen, wie Membranventilen oder dergleichen, zur Stellungsanzeige Grenzschalter eingesetzt, welche dem Stellglied zugeordnet sind und bei der Bewegung des Stellglieds die Ein- und Ausschaltposition durch mechanisches Zusammenarbeiten mit dem Stellglied vorgeben. Somit erfolgt eine rein mechanische Erfassung der entsprechenden Grenzstellungen des Stellglieds.

So gibt es Anwendungsfälle, bei denen sich jedoch die Schaltpositionen in Abhängigkeit von dem Bewegungsweg des Stellgliedes ändern können, beispielsweise einem Membranventil, bei dem die Membrane eine gewisse Eigenelastizität hat, die materialabhängig variieren kann. Auch kann es erwünscht sein, gewisse Steuerfolgen auch an Zwischenpositionen des Bewegungsweges des Stellgliedes auszulösen.

Die Erfindung zielt daher darauf ab, eine frei programmierbare Stellungsanzeigevorrichtung, insbesondere für Ventile mit einem bewegbaren Stellglied der gattungsgemäßen Art bereitzustellen, welche einen universellen Einsatz gestattet und auf einfache Weise an die jeweiligen Anwendungsfälle angepaßt werden kann, wobei auch bauartbedingte und materialbedingte Einflußgrößen auf konstruktiv einfache Weise berücksichtigt werden können.

Nach der Erfindung wird hierzu eine frei programmierbare Stellungsanzeigevorrichtung gemäß Anspruch 1 bereitgestellt.

Bei der erfindungsgemäßen Stellungsanzeigevorrichtung werden also die Positionen des Stellglieds nicht mechanisch, sondern elektrisch erfaßt, so daß sich die Stellungsanzeigevorrichtung nach ihrem Einbau beispielsweise in einem Ventil frei programmieren läßt, d.h. die Stellungsanzeigevorrichtung hat die Fähigkeit entsprechend gewünschte Positionen des Stellgliedes selbstlernend zu erfassen und zu bestimmen. Auf diese Weise läßt sich die erfindungsgemäße Stellungsanzeigevorrichtung universell im Zusammenwirken mit bewegbaren Stellgliedern einsetzen, und es lassen sich auch bauartbedingte und/oder materialbedingte Einflußgrößen dadurch automatisch berücksichtigen, daß die Stellungsanzeigevorrichtung nach der Erfindung eine Selbstlernfunktion hat, bei der die entsprechenden Positionen des Bewegungsweges des Stellgliedes elektrisch erfaßt werden und über elektronische Auswerteeinrichtungen dann ermittelt und gespeichert werden. Durch diese Auslegung können zeitaufwendige Feineinstellarbeiten im Hinblick auf die Stellpositionen des Stellgliedes entfallen, so daß die erfindungsgemäße Stellungsanzeigevorrichtung die Fähigkeit besitzt, die jeweils gewünschten Schaltpositionen genau in der gewünschten Weise vorzugeben. Mit Hilfe der nach der Erfindung vorgesehenen elektronischen Auswerteeinrichtung wird dann das analoge Abgabesignal von der Positionserfassungseinrichtung entsprechend bearbeitet, und die jeweilige Stellposition und Stellungsanzeige ermittelt. Durch diese erfindungsgemäße frei programmierbare Stellungsanzeigevorrichtung läßt sich daher auch die Montage einer solchen Stellungsanzeigevorrichtung vereinfachen und insbesondere nimmt die erfindungsgemäße frei programmierbare Stellungsanzeigevorrichtung äußerst wenig Platz und Bauraum in Anspruch. Somit lassen sich derartige Stellungsanzeigevorrichtungen nach der Erfindung auch dann ohne Schwierigkeiten unterbringen, wenn nur wenig Einbauraum zur Verfügung steht

Insbesondere erstreckt sich die Positionserfassungseinrichtung über den gesamten Bewegungsweg des Stellgliedes hinweg, so daß die Positionserfassungseinrichtung ständig die jeweils aktuelle Position des Stellglieds erfaßt, erkennt und ermittelt. Somit wird bei der erfindungsgemäßen Stellungsanzeigevorrichtung der gesamte Bewegungsweg des Stellgliedes durch Abtastung erfaßt.

Vorzugsweise erzeugt die Positionserfassungseinrichtung ein zur Bewegung des Stellgliedes proportionales analoges Abgabesignal. Bei einer solchen Auslegung erhält man einen linearen Zusammenhang zwischen dem Bewegungsweg des Stellglieds und der mittels der Positionserfassungseinrichtung erfaßten Position des Stellglieds. Hierdurch läßt sich die elektronische Auswerteeinrichtung wesentlich vereinfachen und somit kostengünstiger herstellen. Zweckmäßigerweise wird die Positionserfassungseinrichtung von einem Linearpotentiometer gebildet, welches beispielsweise in Form einer Platine mit ohmschem Schichtwiderstand ausgebildet sein kann. Diese Platine wird dann parallel des gesamten Bewegungsweges des Stellgliedes angeordnet. Derartige Linearpotentiometer lassen sich platzsparend im Zusammenhang mit der Stellgliedanordnung vorsehen und es handelt sich hierbei um Bauteile, welche kostengünstig erhältlich sind.

Insbesondere umfaßt die elektronische Auswerteeinrichtung einen Mikroprozessor und einen Mikroschalter zur Einleitung der Programmierung. Mit Hilfe des Mikroschalters wird die erfindungsgemäße frei programmierbare Stellungsanzeigevorrichtung aktiviert, um die Selbstlernfunktion der Stellungsanzeigevorrichtung einzuleiten. Wenn dann die vorbestimmten Schaltpositionen des Stellglieds bei der Durchführung der Selbstlemfunktion erfaßt und bestimmt sind, können diese dann im Mikroprozessor gespeichert werden und bleiben für den weiteren Betrieb verfügbar.

Vorzugsweise umfaßt die elektronische Auswerteeinrichtung eine Leuchtdiodenanordnung, welche als Betriebszustandsanzeigeeinrichtung dient. Mit Hilfe dieser Leuchtdiodenanordnung kann dann der Betriebszustand der frei programmierbaren Stellungsanzeigevorrichtung nach der Erfindung beispielsweise mit Hilfe von geeigneten Farbsignalkodierungen zuverlässig und leicht erkennbar angezeigt werden. Im Hinblick auf einen vereinfachten Einbau der erfindungsgemäßen frei programmierbaren Stellungsanzeigevorrichtung sind die elektronische Auswerteeinrichtung gegebenenfalls mit dem Mikroprozessor, den Mikroschalter und der Leuchtdiodenanordnung auf einer gemeinsamen Platine vorgesehen, so daß sich diese Einrichtungen raumsparend unterbringen lassen.

Zweckmäßigerweise ist die elektronische Auswerteeinrichtung ausgangsseitig mit wenigstens einem Relais zur Schaltung desselben verbunden, um über das Relais entsprechende Steuerfunktionen auszulösen. Insbesondere bei der Anwendung der erfindungsgemäßen frei programmierbaren Stellungsanzeigevorrichtung bei einem Ventil, dessen Stellglied von einer Betätigungsspindel gebildet wird, kann man so mit Hilfe von beispielsweise zwei ausgangsseitig mit der elektronischen Auswerteeinrichtung verbundenen Schaltrelais ein solches Ventil in der gewünschten Weise ansteuern.

Wenn die frei programmierbare Stellungsanzeigevorrichtung nach der Erfindung bei einem Ventil, wie einem Membranventil, eingesetzt wird, so ist das Stellglied als Betätigungsspindel ausgelegt, welche beispielsweise mit einem Antriebskolben kraftschlüssig verbunden ist, weicher dann das entsprechend zugeordnete Ventilelement, wie die Ventilmembrane, beaufschlagt.

Zusammenfassend wird daher nach der Erfindung eine Stellungsanzeigevorrichtung für ein bewegbares Stellglied angegeben, welche eine frei programmierbare Einstellung gestattet und die eine Selbstlernfunktion zur vereinfachten Handhabung hat. Hierzu ist es wesentlich, daß die Positionen des Stellglieds auf dem Bewegungsweg kontinuierlich mit Hilfe einer Positionserfassungseinrichtung erfaßt werden und mit Hilfe einer elektronischen Auswerteeinrichtung aus dem von der Positionserfassungseinrichtung gelieferten Abgabesignal die entsprechenden Positionsbestimmungen erfolgen. Somit stellt die Erfindung eine frei programmierbare Stellungsanzeigevorrichtung mit mechanischer, elektrischer und elektronischer Auswertelogik bereit.

Die Erfindung wird nachstehend an Hand einer bevorzugten Ausführungsform unter Bezugnahme auf die beigefügte Zeichnung näher erläutert. Darin zeigt:
- Fig. 1: eine schematische Schnittansicht einerAusführungsform einer Betätigungseinrichtung, welche beim Anwendungsbeispiel für ein Ventil bestimmt ist und die erfindungsgemäße frei programmierbare Stellungsanzeigevorrichtung enthält; und
- Fig. 2: ein schematisches Blockdiagramm zur Verdeutlichung der wesentlichen Bauteile und Funktionsweise der erfindungsgemäßen frei programmierbaren Stellungsanzeigevorrichtung.

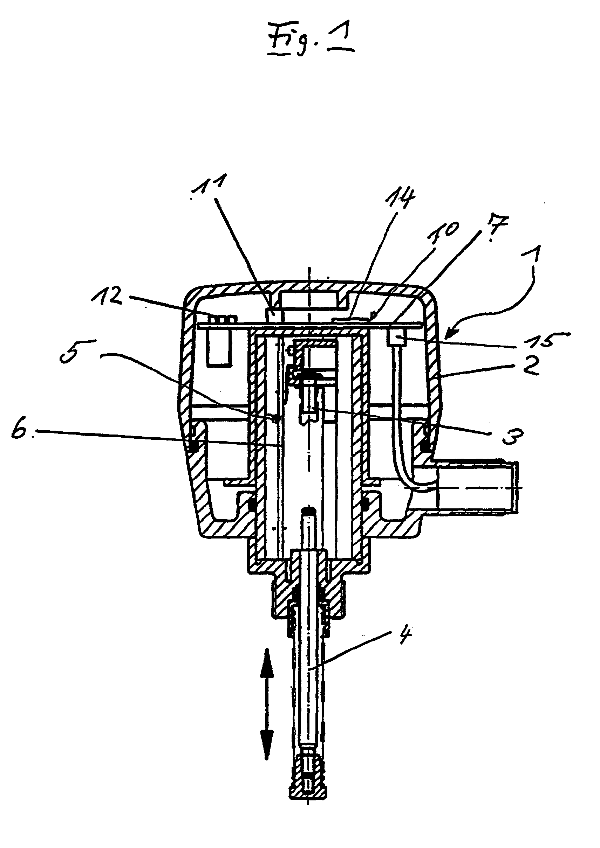

In Figur 1 ist eine Ventilbetätigungseinrichtung insgesamt mit 1 bezeichnet. In einem entsprechenden Gehäuse 2 ist ein bewegbares Stellglied 3 angeordnet, welches beim Anwendungsbeispiel eines Ventils, wie eines Membranventils, beispielsweise von einer Betätigungsspindel 4 gebildet wird, welche mit einem nicht näher dargestellten Antriebskolben kraftschlüssig verbunden ist, welcher dann das ebenfalls nicht näher dargestellte Ventilelement, wie eine Ventilmembrane, beaufschlagt. Bei dem dargestellten Beispiel führt das Stellglied in Form der Betätigungsspindel 4 eine Hubbewegung über einen vorbestimmten Hubbewegungsweg ausgehend von der Ventiloffenstellung zu der Ventilschließstellung aus. In dem Gehäuse 2 und dem Stellglied 3 unmittelbar benachbart angeordnet ist eine Positionserfassungseinrichtung 5 vorgesehen, die beim dargestellten Beispiel sich über den gesamten Bewegungsweg des Stellglieds 3 hinweg erstreckt. Die Positionserfassungseinrichtung 5 ist zweckmäßigerweise als Linearpotentiometer ausgebildet und kann beispielsweise von einer Platine 5 gebildet werden, welche als ohmscher Schichtwiderstand ausgelegt ist. Diese Positionserfassungseinrichtung 5 erzeugt ein analoges Abgabesignal zur Erfassung der jeweiligen Position des Stellglieds 3, und im Falle einer Auslegung der Positionserfassungseinrichtung 5 in Form eines Linearpotentiometers ist dieses analoge Abgabesignal proportional zu der Bewegungsweggröße des Stellglieds 3.

Wie ebenfalls aus Figur 1 zu ersehen ist, ist im Gehäuse 2 eine weitere Platine 7 angeordnet. Diese Platine 7 trägt eine elektronische Auswerteeinrichtung 10, die beispielsweise einen Mikroprozessor 14 umfaßt, und auch einen Mikroschalter 11 aufweist, welcher beispielsweise zur Einleitung der Programmierung der frei programmierbaren Stellungsanzeigevorrichtung 8 dient.

Auch kann die elektronische Auswerteeinrichtung 10 eine Leuchtdiodenanordnung 12 umfassen, welche eine Betriebszustandsanzeige im Zusammenwirken mit der elektronischen Auswerteeinrichtung 10 gestattet.

Zusätzlich können an der Platine 7 ein oder mehrere Relais 15, 16 vorgesehen sein, weiche als Schaltrelais zur Ansteuerung des Ventils dienen. Diese Relais 15, 16 sind ausgangsseitig mit der elektronischen Auswerteeinrichtung 10 verbunden.

Nachstehend soll kurz die Funktionsweise der erfindungsgemäßen frei programmierbaren Stellungsanzeigevorrichtung 8 näher erläutert werden.

Wenn die Ventilbetätigungseinrichtung 1 mit dem Gehäuse 2 und dem Stellglied 3 auf einem entsprechend zugeordneten Ventil, wie einem Membranventil, angebracht ist, wird durch Aktivierung des Mikroschalters 11 die Stellungsanzeigevorrichtung 8 in ihre Programmierstellung zur Ausführung einer selbstlernenden Funktion gebracht. Dies wird gegebenenfalls mittels der Leuchtdiodenanordnung 12 angezeigt. Nunmehr bewegt sich das Stellglied 3 bzw. die Betätigungsspindel 4 bei der Anwendung auf einem Ventil ausgehend von einer Grundstellung über den gesamten Bewegungsweg hinweg. Mit Hilfe der Positionserfassungseinrichtung 5 werden die jeweiligen Positionen des Stellglieds 3 erfaßt und über die von der Positionserfassungseinrichtung 5 erzeugten analogen Abgabesignale werden diese zur elektronischen Auswerteeinrichtung 10 übergeben, welche dann Ober den dort vorgesehenen Mikroprozessor 14 die entsprechende Auswertung vornimmt. Die jeweiligen gewünschten Positionen des Stellglieds 3 werden in dem Mikroprozessor 14 gespeichert, und die elektronische Auswerteeinrichtung 10 gibt dann entsprechende Steuersignale zur Schaltung der Relais 15, 16 ab, welche beispielsweise zur Ventilsteuerung genutzt werden können.

Nach Abschluß dieser Lernfunktion sowie gegebenenfalls unter Nutzung einer Kalibriereinrichtung 20, welche zur Eichung des Mikroprozessors 14 dient, können dann die gewünschten vorgewählten Positionen im anschließenden üblichen Betriebszustand des Ventils in vorbestimmter Weise eingehalten werden. Die Leuchtdiodenanordnung 12 gestattet dann eine jeweils entsprechende Anzeige des Betriebszustands der frei programmierbaren Stellungsanzeigevorrichtung 8.

Bei der erfindungsgemäßen frei programmierbaren Stellungsanzeigevorrichtung 8 wird die Position des Stellglieds 3 über den gesamten Bewegungsweg hinweg ständig erfaßt, so daß man auf betriebszuverlässige Weise die jeweils gewünschten Stellungsanzeigeverhältnisse zuverlässig verwirklichen kann.

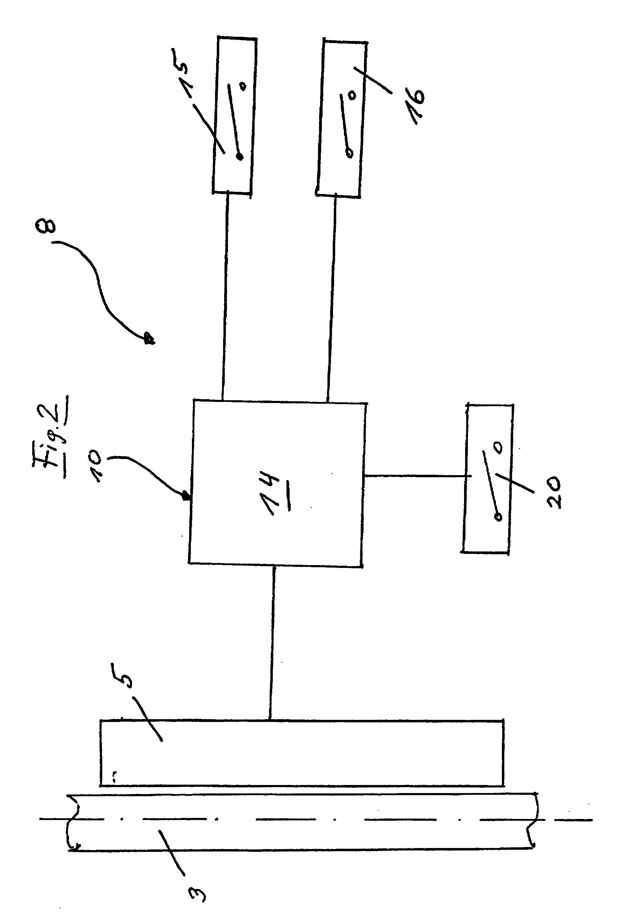

Figur 2 zeigt in einem Blockdiagramm die wesentlichen Funktionsbauteile der frei programmierbaren Stellungsanzeigevorrichtung 8 nach der Erfindung. Die Positionserfassungseinrichtung 5, beispielsweise in Form eines Linearpotentiometers ausgelegt, erfaßt die jeweilige Position des mit 3 angedeuteten Stellglieds. Die von der Positionserfassungseinrichtung 5 erzeugten analogen Abgabesignale werden an den Mikroprozessor 14 der elektronischen Auswerteeinrichtung 10 angelegt Dem Mikroprozessor 14 ist gegebenenfalls eine Kalibriervorrichtung 20 zugeordnet Ausgangsseitig ist der Mikroprozessor 14 beim dargestellten Beispiel mit zwei Schaltrelais 15, 16 betriebsverbunden, über welche die von der elektronischen Auswerteeinrichtung 10 erhaltenen Signale zur Ansteuerung des nicht näher dargestellten Ventils genutzt werden können.

Selbstverständlich ist die Erfindung nicht auf die voranstehend beschriebenen Einzelheiten der bevorzugten Ausführungsform beschränkt, sondern es sind zahlreiche Abänderungen und Modifikationen möglich, die der Fachmann im Bedarfsfall treffen wird, ohne den Erfindungsgedanken zu verlassen. Insbesondere kann die Postionserfassungseinrichtung 5 auch in abweichender Form ausgestaltet werden und es können auch andere Potentiometerbauformen, abgesehen von einer Platine 6, eingesetzt werden. Insbesondere kommen auch beispielsweise Folienpotentiometer in Betracht. Auch kann gegebenenfalls die elektronische Auswerteeinrichtung 10 dahingehend abgewandelt werden, daß noch weitere Einflußgrößen bei der Programmierung der Stellungsanzeigevorrichtung 8 Berücksichtigung finden können. Auch können andere Betriebszustandsanzeigeeinrichtungen an Stelle der Leuchtdiodenanordnung 12 eingesetzt werden.

## Patentansprüche

1. Stellungsanzeigevorrichtung für Ventile, mit einem bewegbaren Stellglied (3), einer Positionserfassungseinrichtung (5) und einer elektronischen Auswerteeinrichtung (10), wobei die Positionserfassungeinrichtung (5) dem Stellglied (3) zugeordnet ist, welche ständig die Position des Stellglieds (3) unter Erzeugung eines analogen Abgabesignals erfaßt, und das Abgabesignal der Positionserfassungseinrichtung (5) an die elektronische Auswerteeinrichtung (10) für die Ermittlung einer Stellungsanzeige angelegt wird, **dadurch gekennzeichnet, daß** die Stellungsanzeigevorrichtung derart ausgebildet ist, daß zur freien Programmierung der Stellungsanzeigevorrichtung mittels Aktivieren eines Mikroschalters (11) der elektronischen Auswerteeinrichtung (10) die Positionserfassungseinrichtung (5) eine Selbstlernfunktion zum automatischen Erfassen der Positionen des Stellglieds (3) ausführt, und die erfaßten Positionen in der Auswerteeinrichtung (10) gespeichert werden, und daß die Auswerteeinrichtung (10) entsprechend den mittels der Selbstlemfunktion erfaßten Positionen ein Steuersignal abgibt.

2. Frei programmierbare Stellungsanzeigevorrichtung nach Anspruch 1, **dadurch gekennzeichnet, daß** sich die Positionserfassungseinrichtung (5) über den gesamten Bewegungsweg des Stellgliedes (3) erstreckt.

3. Frei programmierbare Stellungsanzeigevorrichtung nach Anspruch 1 oder 2, **dadurch gekennzeichnet, daß** die Positionserfassungseinrichtung (5) ein zur Bewegung des Stellgliedes (3) proportionales analoges Abgabesignal erzeugt.

4. Frei programmierbare Stellungsanzeigevorrichtung nach einem der Ansprüche 1 bis 3, **dadurch gekennzeichnet, daß** die Positionserfassungseinrichtung (5) von einem Linearpotentiometer gebildet wird.

5. Frei programmierbare Stellungsanzeigevorrichtung nach einem der Ansprüche 1 bis 3, **dadurch gekennzeichnet, daß** die Positionserfassungseinrichtung (5) von einer Platine (6) mit ohmschem Schichtwiderstand gebildet wird.

6. Frei programmierbare Stellungsanzeigevorrichtung nach einem der vorangehenden Ansprüche, **dadurch gekennzeichnet, daß** die elektronische Auswerteeinrichtung (10) einen Mikroprozessor (14) und einen Mikroschalter (11) zur Einleitung der Programmierung umfaßt.

7. Frei programmierbare Stellungsanzeigevorrichtung nach einem der vorangehenden Ansprüche, **dadurch gekennzeichnet, daß** die elektronische Auswerteeinrichtung (10) eine Leuchtdiodenanordnung (12) als Betriebszustandsanzeigeeinrichtung umfaßt.

8. Frei programmierbare Stellungsanzeigevorrichtung nach einem der Ansprüche 1 bis 7, **dadurch gekennzeichnet, daß** die elektronische Auswerteeinrichtung (10) gegebenenfalls mit dem Mikroprozessor (14), dem Mikroschalter (11) und der Leuchtdiodenanordnung (12) auf einer Platine (7) vorgesehen sind.

9. Frei programmierbare Stellungsanzeigevorrichtung nach einem der Ansprüche 1 bis 8, **dadurch gekennzeichnet, daß** die elektronische Auswerteeinrichtung (10) ausgangsseitig mit wenigstens einem Relais (15, 16) zur Schaltung desselben verbunden ist

10. Frei programmierbare Stellungsanzeigevorrichtung nach einem der Ansprüche 1 bis 9, **dadurch gekennzeichnet, daß** bei einem Ventil das Stellglied (3) von einer Betätigungsspindel (4) gebildet wird, welche mit einem Antriebskolben kraftschlüssig verbunden ist.

11. Frei programmierbare Stellungsanzeigevorrichtung nach Anspruch 9 oder 10, **dadurch gekennzeichnet, daß** die elektronische Auswerteeinrichtung (10) ausgangsseitig mit wenigstens zwei Schaltrelais (15, 16) zur Ansteuerung des Ventils verbunden ist

## Claims

1. Position-indicating device for valves, with a movable actuator (3), a position-capture device (5) and an electronic evaluation unit (10), in which the position-capture device (5) is assigned to the actuator (3) and continually captures the position of the actuator (3), generating as it does so an analogue output signal, and the analogue output signal from the position-capture device (5) is fed to the electronic evaluation unit (10) for a position indication to be calculated, **characterised in that** the position-indicating device is constructed in such a way that for programming of the position-indicating device by activating a microswitch (11) on the electronic evaluation unit (10), the position-capture device (5) executes a self-leaming function for automatical capturing the positions of the actuator (3) and the captured positions are stored in the evaluation unit (10), and that the evaluation unit (10) outputs a control signal corresponding to the positions captured by means of the self-learning function.

2. Freely-programmable position-indicating device as described in Claim 1, **characterised in that** the position-capture device (5) extends over the entire travel path of the actuator (3).

3. Freely-programmable position-indicating device as described in Claim 1 or 2, **characterised in that** the position-capture device (5) generates an analogue output signal proportional to the movement of the actuator (3).

4. Freely-programmable position-indicating device as described in one of Claims 1 to 3, **characterised in that** the position-capture device (5) is formed by a linear potentiometer.

5. Freely-programmable position-indicating device as described in one of Claims 1 to 3, **characterised in that** the position-capture device (5) is formed by a mounting plate (6) with ohmic film resistor.

6. Freely-programmable position-indicating device as described in one of the foregoing Claims, **characterised in that** the electronic evaluation unit (10) includes a microprocessor (14) and microswitch (11) for initiating programming.

7. Freely-programmable position-indicating device as described in one of the foregoing Claims, **characterised in that** the electronic evaluation unit (10) includes a light-emitting diode arrangement (12) as operating-state indicator.

8. Freely-programmable position-indicating device as described in one of Claims 1 to 7, **characterised in that** the electronic evaluation unit (10) is provided on a single mounting plate (7), if appropriate, with the microprocessor (14), microswitch (11) and light-emitting diode arrangement (12).

9. Freely-programmable position-indicating device as described in one of Claims 1 to 8, **characterised in that** the electronic evaluation unit (10) is connected on the output side to at least one relay (15, 16) for switching the latter.

10. Freely-programmable position-indicating device as described in one of Claims 1 to 9, **characterised in that** in the case of a valve the actuator (3) is formed by an actuating spindle (4) which is friction-locked to a driving piston.

11. Freely-programmable position-indicating device as described in Claim 9 or 10, **characterised in that** the electronic evaluation unit (10) is connected on the output side to at least two all-or-nothing relays (15, 16) for controlling the valve.

## Revendications

1. Dispositif indicateur de position pour soupapes avec un actionneur mobile (3), un dispositif de détection de position (5) et un dispositif d'évaluation électronique (10), le dispositif de détection de position (5) étant associé à l'actionneur (3), dont il détecte continuellement la position en générant un signal d'émission analogue, le signal d'émission analogue du dispositif de détection de position (5) étant appliqué au dispositif d'évaluation électronique (10) pour la détermination d'une indication de position, **caractérisé en ce que** pour la libre programmation du dispositif indicateur de position au moyen de l'activation d'un microrupteur (11) du dispositif d'évaluation électronique (10), le dispositif indicateur de position est conçu de manière que le dispositif de détection de position (5) exécute une fonction d'autoadapation pour la détection automatique des positions de l'actionneur (3), que les positions détectées sont mémorisées dans le dispositif d'évaluation (10) et que le dispositif d'évaluation (10) émet un signal de commande en fonction des positions détectées au moyen de la fonction d'autoadaptation.

2. Dispositif indicateur de position librement programmable suivant la revendication 1, **caractérisé en ce que** le dispositif de détection de position (5) s'étend sur l'ensemble de la course de l'actionneur (3).

3. Dispositif indicateur de position librement programmable suivant la revendication 1 ou 2, **caractérisé en ce que** le dispositif de détection de position (5) génère un signal d'émission analogue proportionnel au mouvement de l'actionneur (3).

4. Dispositif indicateur de position librement programmable suivant une des revendications 1 à 3, **caractérisé en ce que** le dispositif de détection de position (5) est formé par un potentiomètre linéaire.

5. Dispositif indicateur de position librement programmable suivant une des revendications 1 à 3, **caractérisé en ce que** le dispositif de détection de position (5) est formé par une platine (6) avec une résistance à couche ohmique.

6. Dispositif indicateur de position librement programmable suivant une des revendications précédentes, **caractérisé en ce que** le dispositif d'évaluation électronique (10) comprend un microprocesseur (14) et un microrupteur (11) pour initialiser la programmation.

7. Dispositif indicateur de position librement programmable suivant une des revendications précédentes, **caractérisé en ce que** le dispositif d'évaluation électronique (10) comprend un arrangement de diodes lumineuses (12) servant de dispositif indicateur de l'état de service.

8. Dispositif indicateur de position librement programmable suivant une des revendications 1 à 7, **caractérisé en ce que** le dispositif d'évaluation électronique (10) et le cas échéant le microprocesseur ( 14), le microrupteur (11) et l'arrangement de diodes lumineuses (12) sont prévus sur une platine (7).

9. Dispositif indicateur de position librement programmable suivant une des revendications 1 à 8, **caractérisé en ce que** le dispositif d'évaluation électronique (10) est relié, côté sortie, à au moins un relais (15, 16) pour la commande de celui-ci.

10. Dispositif indicateur de position librement programmable suivant une des revendications 1 à 9, **caractérisé en ce que** l'actionneur (3) d'une soupape est formé par une broche d'actionnement (4) qui est reliée, par adhérence, à un piston d'entraînement.

11. Dispositif indicateur de position librement programmable suivant la revendication 9 ou 10, **caractérisé en ce que** le dispositif d'évaluation électronique (10) est relié, côté sortie, à au moins deux relais de commande (15, 16) pour l' excitation de la soupape.
